(19) Europäisches Patentamt
European Patent Office
Office européen des brevets

(11) EP 3 037 456 B1

(12) **EUROPEAN PATENT SPECIFICATION**

(45) Date of publication and mention of the grant of the patent:
**08.05.2019 Bulletin 2019/19**

(21) Application number: **14837429.1**

(22) Date of filing: **21.08.2014**

(51) Int Cl.:
*C08G 65/32* (2006.01) *C08L 71/02* (2006.01)
*C08G 65/324* (2006.01) *C08G 65/328* (2006.01)

(86) International application number:
**PCT/JP2014/071919**

(87) International publication number:
**WO 2015/025929 (26.02.2015 Gazette 2015/08)**

(54) **BIFUNCTIONAL COMPOUND CONTAINING PERFLUORO(POLY)ETHER GROUP, COMPOSITION WHICH CONTAINS BIFUNCTIONAL COMPOUND CONTAINING PERFLUORO(POLY)ETHER GROUP, AND METHODS FOR PRODUCING SAID COMPOUND AND SAID COMPOSITION**

BIFUNKTIONELLE VERBINDUNG MIT EINER PERFLUOR(POLY)ETHERGRUPPE, ZUSAMMENSETZUNG MIT DER BIFUNKTIONELLEN VERBINDUNG MIT DER PERFLUOR(POLY)ETHERGRUPPE SOWIE VERFAHREN ZUR HERSTELLUNG DIESER VERBINDUNG UND DIESER ZUSAMMENSETZUNG

COMPOSÉ BIFONCTIONNEL CONTENANT UN GROUPE PERFLUORO(POLY)ÉTHER, COMPOSITION CONTENANT UN COMPOSÉ BIFONCTIONNEL CONTENANT UN GROUPE PERFLUORO(POLY)ÉTHER, ET PROCÉDÉS DE PRODUCTION DUDIT COMPOSÉ ET DE LADITE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2013 JP 2013173346**

(43) Date of publication of application:
**29.06.2016 Bulletin 2016/26**

(73) Proprietor: **Daikin Industries, Ltd.**
**Osaka-shi, Osaka 566-8585 (JP)**

(72) Inventors:
- **MOHARA, Kensuke**
**Osaka-shi,**
**Osaka 566-858 (JP)**
- **NOMURA, Takashi**
**Osaka-shi,**
**Osaka 566-858 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 037 455**
**EP-A2- 0 165 649**
**WO-A1-03/002506**
**WO-A1-2007/113293**
**DE-A1- 2 708 677**
**JP-A- S5 278 827**
**JP-A- 2003 335 855**
**JP-A- 2008 115 106**
**JP-A- 2009 029 877**
**US-A1- 2004 176 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 037 456 B1

## Description

TECHNICAL FIELD

The present invention relates to a perfluoro(poly)ether group-containing bifunctional compound. The present invention also relates to a composition comprising a perfluoro(poly)ether group-containing bifunctional compound and methods of producing the same.

BACKGROUND ART

It is known that a perfluoro(poly)ether group-containing compound may provide excellent water repellency, oil repellency, antifouling properties, etc. Therefore, techniques of synthesizing perfluoro(poly)ether group-containing compounds having various structures are vigorously explored.

Synthesis of perfluoro(poly)ether group-containing compounds requires various raw material compounds or intermediates in accordance with a structure of an intended compound. With regard to a method of synthesizing such a raw material compound or an intermediate, for example, Japanese Laid-Open Patent Publication No. H1 (1989)-052733 (Patent Document 1) discloses a method of synthesizing $C_{1-5}$ perfluoroalkyl-$(OCF_2CF_2CF_2)_n$-$OCF(CF_3)COOR'$ [R': alkyl group] by reacting alcohol with $C_{1-5}$ perfluoroalkyl-$(OCF_2CF_2CF_2)_n$-$OCF(CF_3)COF$ synthesized by using 2,2,3,3-tetrafluorooxetane.

As described in Patent Document 1, if a perfluoro(poly)ether group is represented by $-(OCF_2CF_2CF_2)_n-$, a perfluoro(poly)ether group-containing monocarboxylic acid is relatively easily synthesized. This is because if a perfluoro(poly)ether group is represented by $-(OCF_2CF_2CF_2)_n-$, the perfluoro(poly)ether group-containing monocarboxylic acid can favorably be synthesized by the ring-opening polymerization of 2,2,3,3-tetrafluorooxetane.

On the other hand, it is extremely difficult to synthesize a perfluoro(poly)ether group-containing monocarboxylic acid having a perfluoro(poly)ether group represented by $-(OCF_2)_n-$ and/or $-(OCF_2CF_2)_n-$. For example, Japanese Laid-Open Patent Publication No. 2004-359955 (Patent Document 2) describes a (per)fluoropolyether carboxylic acid. In Patent Document 2, a dicarboxylic acid is synthesized that has a perfluoro(poly)ether group represented by $-(OCF_2)_n-$ and/or $-(OCF_2CF_2)_n-$ (Examples 1, 2). On the other hand, no monocarboxylic acid is synthesized in Patent Document 2. A synthesis of the perfluoro(poly)ether group-containing monocarboxylic acid is difficult in case that the perfluoro(poly)ether group is represented by $-(OCF_2)_n-$ and/or $-(OCF_2CF_2)_n-$. The reason is because a synthesis starting material is a compound having the same functional group at the both terminals thereof such as perfluoro(poly)ether group-containing dialcohol. In Patent Document 2, perfluoro(poly)ether group-containing dialcohol is used as a synthesis starting material to synthesis diester or dicarboxylate to consequently acquire a dicarboxylic acid. If a compound having the same functional group at the both terminals thereof such as a perfluoro(poly)ether group-containing dialcohol compound is used as a synthesis starting material, it is extremely difficult to selectively obtain only a perfluoro(poly)ether group-containing monocarboxylic acid.

Japanese Unexamined Patent Application Publication No. 2010-533644 (Patent Document 3) describes a method of synthesizing half ester. Patent Document 3 discloses that the method of Patent Document 3 is useful when monoester is prepared from straight-chain (hydrocarbon) diester such as malonic acid, adipic acid, succinic acid, and glutaric acid (paragraph [0032] and Examples 1 to 86 etc.). On the other hand, Patent Document 3 has no description about preparation of monoester from (poly)ether group-containing diester. Patent Document 3 has no description about preparation of monoester from fluorine-containing diester. Patent Document 3 discloses that a yield significantly varies depending on structure of a chemical substance when monoester is prepared from diester (paragraph [0015] etc.).

PRIOR ART DOCUMENT

PATENT DOCUMENTS

Patent Document 1: Japanese Laid-Open Patent Publication No. HI (1989)-052733
Patent Document 2: Japanese Laid-Open Patent Publication No. 2004-359955
Patent Document 3: Japanese Unexamined Patent Application Publication No. 2010-533644

US 2004/176636 discloses a process for producing fluorinated vinyl ether compounds. EP 0 165 649 A2 refers to a process of making alternative polyfluoroethylester derivatives by way of a full hydrolysis of the precursor compounds.

## SUMMARY OF THE INVENTION

## PROBLEM TO BE SOLVED BY THE INVENTION

The present invention solves the conventional problems and it is an object of the present invention to provide a perfluoro(poly)ether group-containing bifunctional compound extremely useful as a raw material compound or an intermediate in synthesis of perfluoro(poly)ether group-containing compounds having various structures.

## MEANS FOR SOLVING PROBLEM

The present inventors intensively have studied a means of acquiring a perfluoro(poly)ether group-containing monocarboxylic acid extremely useful as a synthetic intermediate. As a result, the present inventors have be able to acquire a novel perfluoro(poly)ether group-containing monocarboxylic acid having a structure described below in detail to complete the present invention.

Therefore, the present invention provides the following aspects.

[1] A perfluoro(poly)ether group-containing bifunctional compound represented by following general formula (1):
[Chemical 1]

A-RF-Z ··· (1)

wherein Rf is a group of the formula

$$-(OCF_2)_a-(OC_2F_4)_b-(OC_3F_6)_c-(OC_4F_8)_d-$$

wherein each of a, b, c, and d independently denotes an integer of 0 - 200, the sum of a, b, c, and d is at least 1, and each of repeating units enclosed in parentheses with a, b, c, or d added thereto is present in arbitrary order in the formula, wherein $(a+b) \geq 10$ and $(c+d) \leq 10$, A denotes an $R^1O$-CO-W- group, where $R^1$ is a $C_{1-4}$-alkyl group, W and X each independently are a bond, a $C_{1-4}$ alkylene, a $C_{1-4}$ fluoroalkylene, or $C_{1-4}$ perfluoroalkylene, and
Z denotes a -X-Y group, where X is a single bond or a bivalent organic group containing 1 to 4 carbon atoms and Y is a carboxylic acid group or salt thereof.

[2] The compound of [1], which has an average molecular weight of 500 -100,000, and preferably of 1,500-20,000.

[3] The compound of any of [1]-[2], wherein

- $(OC_2F_4)_b$- is $-(OCF_2CF_2)_b-$,
- $(OC_3F_6)_c$- is $-(OCF_2CF_2CF_2)_c-$, and
- $(OC_4F_8)_d$- is $-(OCF_2CF_2CF_2CF_2)_d-$.

[4] A compound of the formula
[Chemical 3]

A-RF-Z ··· (1)

according to embodiment [1]wherein
Rf is a group of the formula

$$-(OCF_2)_a-(OC_2F_4)_b-(OC_3F_6)_c-(OC_4F_8)_d-$$

wherein a, b, c, and d each independently denotes an integer of 0-200, the sum of a, b, c, and d is at least 1, and each of repeating units enclosed in parentheses with a, b, c, or d added thereto is present in arbitrary order in the formula, wherein (a+b) $\geq$ 10 and (c+d) $\leq$ 10;
A denotes $R^1$O-CO-W, where $R^1$ is a $C_{1-4}$- alkyl, W and X each independently are a bond, C1-4-alkylene, C1-4-fluoroalkylene or C1-4-perfluoroalkylene, and the compound of embodiment [1] has an average molecular weight of 500-100,000,
Z is -X-Y, where X is a single bond or a bivalent organic group containing 1 to 4 carbon atoms and Y is a carboxylic acid group or salt thereof.

[5] The composition comprising the compound of [4], which further comprises a compound of the formula

A-Rf-A (2)

and a compound of the formula

Z-Rf-Z (3),

wherein A, Rf and Z are as defined in formula (1) in [4], and

wherein the proportions of amounts are 42-99.9 parts by weight (pbw) of the compound of formulae (1), 0.05-49 pbw of the compound of formula (2) and 0.05-9 pbw of the compound of formula (3), relative to a total of 100 pbw of the compounds of formulae (1)-(3).

[6] The composition of [5], which further comprises 0.01-9 pbw, relative to a total of 100 pbw of the compounds of formulae (1)-(3), of a compound of formula (4):

B-Rf-O-B (4)

wherein Rf is as defined in formula (1) in [5], and B each independently is $C_{1-16}$-perfluoroalkyl or $HCF_2(CF_2)_g$- wherein g is an integer of 0-15.

[7] The composition of any of [5]-[6], wherein in the formula

$-(OC_2F_4)_b-$ is $-(OCF_2CF_2)_b-$,
$-(OC_3F_6)_c-$ is $-(OCF_2CF_2CF_2)_c-$, and
$-(OC_4F_8)_d-$ is $-(OCF_2CF_2CF_2CF_2)_d-$.

[8] A method of producing the compound of any of [1]-[3], comprising hydrolyzing a compound of the formula

A-Rf-A (2)

wherein
Rf is a group of the formula

$$-(OCF_2)_a-(OC_2F_4)_b-(OC_3F_6)_c-(OC_4F_8)_d-$$

wherein *a*, b, c, and *d* each independently are an integer of 0-200, the sum of *a*, *b*, *c*, and *d* is at least 1, and each of repeating units enclosed in parentheses with *a*, *b*, *c*, or *d* added thereto is present in arbitrary order in the formula, wherein (a+b) $\geq$ 10 and ($c$+$d$) $\leq$ 10; and
A each independently is $R^1$O-CO-W-, where $R^1$ is alkyl and W is a bond or a bivalent organic group containing 1-4 carbon atoms; and
wherein the hydrolysis is performed in the presence of a dispersion auxiliary agent including 1 or 2 or more fluorine atom-containing solvents selected from perfluorohexane, $CF_3CF_2CHCl_2$, $CF_3CH_2CF_2CH_3$, $CF_3CHFCHFC_2F_5$, $CF_3-(CF_2)_4-CF_2H$, 1,1,2,2,3,3,4-heptafluorocyclopentane, $C_4F_9OCH_3$, $C_4F_9OC_2H_5$, $CF_3CH_2OCF_2CHF_2$, $C_6F_{13}CH=CH_2$, xylene hexafluoride, perfluorobenzene, methylpentadecafluoroheptylketone, trifluoroethanol, pentafluoropropanol, hexafluoroisopropanol, $HCF_2CF_2CH_2OH$, methyltrifluoromethanesulfonate, trifluoroacetic acid, and $CF_3O(CF_2CF_2O)_m(CF_2O)_nCF_2CF_3$, wherein *m* and *n* independently are an integer of 0-1000, and each of repeating units enclosed in parentheses with *m* or *n* added thereto is present

in arbitrary order in the formula, provided that ($m$+$n$) ≥ 1; and
in the presence of an aqueous solution containing an alkali metal hydroxide.

[9] A method of producing the composition of any of [5]-[7], comprising hydrolyzing a compound of the formula

A-Rf-A (2)

wherein

Rf is a group of the formula

$$-(OCF_2)_a-(OC_2F_4)_b-(OC_3F_6)_c-(OC_4F_8)_d-$$

wherein $a$, b, c, and $d$ each independently are an integer of 0-200, the sum of $a$, $b$, $c$, and $d$ is at least 1, and each of repeating units enclosed in parentheses with $a$, $b$, $c$, or d added thereto is present in arbitrary order in the formula, wherein ($a$+$b$) ≥ 10 and ($c$+$d$) ≤ 10; and
A each independently is $R^1O$-CO-W-, where $R^1$ is alkyl and W is a bond or a bivalent organic group containing 1-4 carbon atoms; and
wherein the hydrolysis is performed in the presence of a dispersion auxiliary agent including 1 or 2 or more fluorine atom-containing solvents selected from perfluorohexane, $CF_3CF_2CHCl_2$, $CF_3CH_2CF_2CH_3$, $CF_3CHFCHFC_2F_5$, $CF_3$-$(CF_2)_4$-$CF_2H$, 1,1,2,2,3,3,4-heptafluorocyclopentane, $C_4F_9OCH_3$, $C_4F_9OC_2H_5$, $CF_3CH_2OCF_2CHF_2$, $C_6F_{13}CH=CH_2$, xylene hexafluoride, perfluorobenzene, methylpentadecafluoroheptylketone, trifluoroethanol, pentafluoropropanol, hexafluoroisopropanol, $HCF_2CF_2CH_2OH$, methyltrifluoromethanesulfonate, trifluoroacetic acid, and $CF_3O(CF_2CF_2O)_m(CF_2O)_nCF_2CF_3$, wherein $m$ and $n$ independently are an integer of 0-1000, and each of repeating units enclosed in parentheses with $m$ or $n$ added thereto is present in arbitrary order in the formula, provided that ($m$+$n$) ≥ 1; and
in the presence of an aqueous solution containing an alkali metal hydroxide.

[10] The method of [9], wherein the hydrolysis achieves a generation rate $G_{(1)}$ of the compound of formula (1) acquired from the compound of formula (2) and a generation rate $G_{(3)}$ of the compound of formula (3) acquired from the compound of formula (2), which satisfy the condition of $G_{(1)}/G_{(3)} \geq 9$.

[11] The method of any of [8]-[10], wherein the hydrolysis includes 1 or 2 or more organic solvents selected from acetone, isobutyl alcohol, isopropyl alcohol, isopentyl alcohol, ethylene glycol monoethyl ether, ethyleneglycol mono-n-buthyl ether, ethylene glycol monomethyl ether, cyclohexanol, cyclohexanone, 1,4-dioxane, N,N-dimethylformamide, tetrahydrofuran, 1-butanol, 2-butanol, methanol, methyl ethyl ketone, acetonitrile, dimethylacetamide, N-methylpyrrolidone, sulfolane, dimethyl sulfoxide, ethylene glycol dimethyl ether, diethylene glycol dimethyl ether, triethylene glycol dimethyl ether, tetraethylene glycol dimethyl ether, and cyclopentyl methyl ether.

EFFECT OF THE INVENTION

The present invention provides a novel perfluoro(poly)ether group-containing bifunctional compound represented by general formula (1) that is monocarboxylic acid (monoester). The present invention also provides a composition comprising an extremely high content of the perfluoro(poly)ether group-containing bifunctional compound. These are extremely useful as a raw material compound or an intermediate in synthesis of perfluoro(poly)ether group-containing compounds having various structures.

MODES FOR CARRYING OUT THE INVENTION

Perfluoro(poly)ether Group-Containing Bifunctional compound

The present invention provides a perfluoro(poly)ether group-containing bifunctional compound represented by following general formula (1):

A-RF-Z ··· (1)

wherein Rf is a perfluoro(poly)ether group of the formula

$$-\left(OCF_2\right)_a-\left(OC_2F_4\right)_b-\left(OC_3F_6\right)_c-\left(OC_4F_8\right)_d-$$

wherein each of a, b, c, and d independently denotes an integer of 0-200, the sum of a, b, c, and d is at least 1, and each of repeating units enclosed in parentheses with a, b, c, or d added thereto is present in arbitrary order in the formula, wherein (a+b) $\geq$ 10 and (c+d) $\leq$ 10, A denotes $R^1$O-CO-W, where $R^1$ is a $C_{1-4}$-alkyl group, W and X each independently are a bond, $C_{1-4}$-alkylene, $C_{1-4}$-fluoroalkylene or $C_{1-4}$-perfluoroalkylene, and Z denotes a -X-Y group, where X is a a single bond or a bivalent organic group containing 1 to 4 carbon atoms and Y is a carboxylic acid group or salt thereof.

The "perfluoro(poly)ether group-containing bifunctional compound" in this description is a bifunctional compound having a structure as represented by general formula (1) and having an alkyl ester group at one terminal and a carboxylic acid group or salt thereof at the other terminal.

Among the repeating units, -($OC_2F_4$)- may be any of -($OCF_2CF_2$)- and -(OCF($CF_3$))-, preferably -($OCF_2CF_2$)-.

Among the repeating units, -($OC_3F_6$)- may be any of -($OCF_2CF_2CF_2$)-, -(OCF($CF_3$)$CF_2$)-, and -($OCF_2$CF($CF_3$))-, preferably -($OCF_2CF_2CF_2$)-.

Among the repeating units, -($OC_4F_8$)- may be any of -($OCF_2CF_2CF_2CF_2$)-, -(OCF($CF_3$)$CF_2CF_2$)-, -($OCF_2$CF($CF_3$)$CF_2$)-, -($OCF_2CF_2$CF($CF_3$))-, -(OC$(CF_3)_2CF_2$)-, -($OCF_2$C$(CF_3)_2$)-, -(OCF($CF_3$)CF($CF_3$))-, -(OCF($C_2F_5$)$CF_2$)-, and -($OCF_2$CF($C_2F_5$))-. Preferably, -($OC_4F_8$)- may be -($OCF_2CF_2CF_2CF_2$)-.

In formula (1), each of a, b, c, and d preferably independently denotes an integer of 0-100. (a+b) $\geq$ 10 and (c+d) $\leq$ 10. More preferably, (a+b) is 10- 200, and (c+d) is -6. In any forms, each of the repeating units enclosed in parentheses with a, b, c, or d added thereto is present in arbitrary order in the formula.

In formula (1), each of W and X independently denotes a single bond or a bivalent organic group containing 1 to 4 carbon atoms.

The "single bond" as used herein refers to a simple bond without an atom etc. For example, if the -X-Y group denoted by Z has X that is a single bond, Z denotes a -Y group.

Specific examples of the "bivalent organic group containing 1 to 4 carbon atoms" include $C_{1-4}$ alkylene groups, $C_{1-4}$ fluoroalkylene groups, or $C_{1-4}$ perfluoroalkylene groups.

The $C_{1-4}$ alkylene groups include -$CH_2$-, -$C_2H_4$-, -$C_3H_6$-, and -$C_4H_8$-. It is noted that -$C_3H_6$- and -$C_4H_8$- may be straight-chain or branched. The $C_{1-4}$ fluoroalkylene groups include a group having a fluorine atom substituted for a portion of hydrogen atoms in the $C_{1-4}$ alkylene group. The $C_{1-4}$ perfluoroalkylene groups include a group having fluorine atoms substituted for all the hydrogen atoms in the $C_{1-4}$ alkylene group.

Each of the W and X preferably independently denotes -$CF_2$-, -$CF_2CF_2$-, or -CF($CF_3$)$CF_2$-.

In formula (1), $R^1$ is a $C_{1-4}$ alkyl group. The $C_{1-4}$ alkyl group may be a straight-chain or branched $C_{1-4}$ alkyl group. Specific examples of the $C_{1-4}$ alkyl group include, for example, a methyl group, an ethyl group, an n-propyl group, an isopropyl group, an n-butyl group, a 2-butyl group, an isobutyl group, t-butyl group, etc. $R^1$ is more preferably a methyl group or an ethyl group. These alkyl groups may have a substituent. The substituent may be, for example, halogen atoms such as a fluorine atom or chlorine atom, an amino group, a sulphonyl group, and a hydroxyl group.

In formula (1), specific examples of carboxylate in the carboxylic acid group or salt thereof denoted by Y include alkali metal salts of carboxylic acid such as sodium carboxylate, potassium carboxylate, lithium carboxylate, and cesium carboxylate, and ammonium salt of carboxylic acid.

One of preferable specific forms of the perfluoro(poly)ether group-containing bifunctional compound represented by formula (1) may be a form in which Rf in formula (1) is -$(OCF_2)_a$-$(OCF_2CF_2)_b$-$(OC_3F_6)_c$-$(OC_4F_8)_d$- (in formula, each of a and b independently denotes 0 or more to 200 or less provided that the sum of a and b is 1 or more and, preferably, each of a and b independently denotes 0 or more to 100 or less provided that the sum of a and b is 10 or more; each of c and d independently denotes an integer of 0 or more or 1 or more to 30 or less, preferably 0 or more to10 or less; the sum of a, b, c, and d is 10 or more, preferably 20 or more, and 200 or less, preferably 100 or less; and each of repeating units enclosed in parentheses with a subscript a, b, c, or d added thereto is present in arbitrary order in the formula); A denotes $R^1$O-CO-W- group, where $R^1$ is a $C_{1-4}$ alkyl group; W denotes -$CF_2$-, -$CF_2CF_2$-, or -CF($CF_3$)$CF_2$-; Z denotes a -X-Y group, where X is -$CF_2$-, -$CF_2CF_2$-, or -CF($CF_3$)$CF_2$- and Y denotes a carboxylic acid group or salt thereof. In this form, Rf is more preferably -$(OCF_2)_a$-$(OCF_2CF_2)_b$-$(OCF_2CF_2CF_2)_c$-$(OCF_2CF_2CF_2CF_2)_d$- (in formula, a to d have the same meaning as above, and each of repeating units enclosed in parentheses with a subscript a, b, c, or d added thereto is present in arbitrary order in the formula), and Rf is further preferably -$(OCF_2)_a$-$(OCF_2CF_2)_b$- (in formula, a and b have the same meaning as above, and each of repeating units enclosed in parentheses with a subscript a or b added thereto is present in arbitrary order in the formula).

An average molecular weight of the perfluoro(poly)ether group-containing bifunctional compound represented by formula (1) is preferably 500 to 100,000, more preferably 1,000 to 50,000, further preferably 1,500 to 20,000. In the

present invention, the "average molecular weight" refers to a number average molecular weight and the "average molecular weight" is defined as a value measured with $^{19}F$-NMR.

Composition Comprising Perfluoro(poly)ether Group-Containing Bifunctional Compound

[5] The present invention provides a composition comprising a perfluoro(poly)ether group-containing bifunctional compound. This composition contains a compound represented by the following general formula (1)

A-RF-Z ··· (1)

according to embodiment [1], wherein
Rf is a group of the formula

$$-\left(OCF_2\right)_a-\left(OC_2F_4\right)_b-\left(OC_3F_6\right)_c-\left(OC_4F_8\right)_d-$$

wherein each of a, b, c, and d independently denotes an integer of -200, the sum of a, b, c, and d is at least 1, and each of repeating units enclosed in parentheses with a, b, c, or d added thereto is present in arbitrary order in the formula, wherein $(a+b) \geq 10$ and $(c+d) \leq 10$;

A denotes an $R^1$O-CO-W- group, where $R^1$ is a $C_{1-4}$-alkyl, W and X each independently are a bond, $C_{1-4}$-alkylene, $C_{1-4}$-fluoroalkylene or $C_{1-4}$-perfluoroalkylene, and the compound of formula (1) has an average molecular weight of 500-100,000, Z denotes a -X-Y group, where X is a a single bond or a bivalent organic group containing 1 to 4 carbon atoms and Y is a carboxylic acid group or salt thereof, which
further comprises a compound represented by following general formula (2)

A-Rf-A ··· (2)

and a compound represented by following general formula (3):

Z-RF-Z ··· (3)

wherein A, Rf and Z are as defined in formula (1) of embodiment [4], and
wherein the proportions of amounts are 42-99.9 parts by weight (pbw) of the compound of formulae (1), 0.05-49 pbw of the compound of formula (2) and 0.05-9 pbw of the compound of formula (3), relative to a total of 100 pbw of the compounds of formulae (1)-(3).

The definitions of A, Rf, and Z in general formulas (2) and (3) are the same as above. The compound represented by general formula (2) contained in the composition may be an unreacted substance in a hydrolysis reaction described in detail below. The compound represented by general formula (3) contained in the composition may be a dicarboxylic acid or salt thereof generated by hydrolysis of both ends in diester that is a raw material.

In general formula (2), the $R^1$O-CO-W- groups denoted by A may be the same groups or may be different groups. In the $R^1$O-CO-W- groups denoted by A of general formula (2), more preferably, each $R^1$ independently denotes a $C_{1-4}$ alkyl group and each W independently denotes $-CF_2-$, $-CF_2CF_2-$, or $-CF(CF_3)CF_2$.

In general formula (3), the -X-Y groups denoted by Z may be the same groups or may be different groups. In the -X-Y groups denoted by Z in general formula (3), more preferably, each X independently denotes $-CF_2-$, $-CF_2CF_2-$, or $-CF(CF_3)CF_2-$ and each Y independently denotes a carboxylic acid group or alkali metal salt thereof.

The above composition which further comprises 0.01-9pbw, relative to a total of 100 pbw of the compounds of formulae (1)-(3), of a compound of formula (4)

B-Rf-O-B ··· (4)

wherein Rf is as defined in formula (1) in embodiment [5], and B each independently is $C_{1-16}$-perfluoroalkyl or $HCF_2(CF_2)_g$- wherein g is an integer of 0-15.

The $C_{1-16}$ perfluoroalkyl group represented by B is a straight-chain or branched perfluoroalkyl group having

the carbon number 1 to 16, preferably straight-chain or branched perfluoroalkyl group having the carbon number 1 to 3, more specifically $-CF_3$, $-CF_2CF_3$, or $-CF_2CF_2CF_3$. B may be the same groups or may be different groups.

The compound represented by general formula (4) may be generated at the time of preparation of the compound represented by general formula (2) used in the hydrolysis reaction described in detail below. Therefore, the compound may be a byproduct generated at the time of synthesis of a raw material compound of the hydrolysis reaction in the present invention.

Among the repeating units in Rf of formulas (1) to (4), $-(OC_2F_4)-$ may be any of $-(OCF_2CF_2)-$ and $-(OCF(CF_3))-$, and may preferably be $-(OCF_2CF_2)-$.

Among the repeating units in Rf of formulas (1) to (4), $-(OC_3F_6)-$ may be any of $-(OCF_2CF_2CF_2)-$, $-(OCF(CF_3)CF_2)-$, and $-(OCF_2CF(CF_3))-$, and may preferably be $-(OCF_2CF_2CF_2)-$.

Among the repeating units in Rf of formulas (1) to (4), $-(OC_4F_8)-$ may be any of $-(OCF_2CF_2CF_2CF_2)-$, $-(OCF(CF_3)CF_2CF_2)-$, $-(OCF_2CF(CF_3)CF_2)-$, $-(OCF_2CF_2CF(CF_3))-$, $-(OC(CF_3)_2CF_2)-$, $-(OCF_2C(CF_3)_2)-$, $-(OCF(CF_3)CF(CF_3))-$, $-(OCF(C_2F_5)CF_2)-$, and $-(OCF_2CF(C_2F_5))-$, and may preferably be $(OCF_2CF_2CF_2CF_2)-$. $R^1$ and Z in formulas (1) to (4) are the same as the definition described above.

An preferred aspect of the composition according to the present invention may be a form in which the sum of a and b is 1 or more in the perfluoro(poly)ether group-containing bifunctional compound represented by general formula (1) contained in the composition. In this case, if this composition contains the compound represented by general formulas (2) to (3) or (2) to (4), it is preferable that the sum of a and b be 1 or more also in each of the formulas.

In such a form, preferably, the sum of a and b is 1 or more in formulas (1), (1) to (3), or formulas (1) to (4). Preferably, each of a, b, c, and d preferably independently denotes an integer of 0 or more to 200 or less in formulas (1), (1) to (3), or formulas (1) to (4). Preferably, a+b is 10 or more, and c+d is 10 or less. More preferably, a+b is 10 or more to 200 or less, and c+d is 0 or more to 5 or less. In any forms, each of the repeating units enclosed in parentheses with a, b, c, or d added thereto is present in arbitrary order in the formulas.

An preferred aspect of the composition according to the present invention may be a form in which Rf in formulas (1), (1) to (3), or formulas (1) to (4) is $-(OCF_2)_a-(OCF_2CF_2)_b-(OC_3F_6)_c-(OC_4F_8)_d-$ (in formula, each of a and b independently denotes 0 or more to 200 or less provided that the sum of a and b is 1 or more and, preferably, each of a and b independently denotes 0 or more to 100 or less provided that the sum of a and b is 10 or more; each of c and d independently denotes an integer of 0 or more or 1 or more to 30 or less, preferably 0 or more to 10 or less; the sum of a, b, c, and d is 10 or more, preferably 20 or more, to 200 or less, preferably 100 or less; and each of repeating units enclosed in parentheses with a subscript a, b, c, or d added thereto is present in arbitrary order in the formula). A more preferable form may be a form in which Rf is $-(OCF_2)_a-(OCF_2CF_2)_b-(OCF_2CF_2CF_2)_c-(OCF_2CF_2CF_2CF_2)_d-$ (in formula, a to d have the same meaning as above, and each of repeating units enclosed in parentheses with a subscript a, b, c, or d added thereto is present in arbitrary order in the formula). More preferably, for example, Rf may be a perfluoro(poly)ether group represented by $-(OCF_2)_a-(OCF_2CF_2)_b-$ (in formula, a and b have the same meaning as above, and each of repeating units enclosed in parentheses with a subscript a or b added thereto is present in arbitrary order in the formula).

Another preferred aspect of the composition according to the present invention may be a form in which Rf in formulas (1), (1) to (3), or formulas (1) to (4) is a perfluoro(poly)ether group represented by $-(OC_3F_6)_c-$, more preferably $-(OCF_2CF_2CF_2)_c-$. In this case, c is -200, preferably 5-50, more preferably -.

Method of Producing Perfluoro(poly)ether Group-Containing Bifunctional compound and Composition Comprising Perfluoro(poly)ether Group-Containing Bifunctional compound

The present invention also provides a method of producing the perfluoro(poly)ether group-containing bifunctional compound represented by general formula (1). The perfluoro(poly)ether group-containing bifunctional compound represented by general formula (1) is acquired by hydrolysis of the compound represented by general formula (2) in the presence of an aqueous solution containing an alkali metal hydroxide. The method of producing of the present invention is characterized by selective hydrolysis in which the hydrolysis of the compound represented by general formula (2), i.e., diester, generates the perfluoro(poly)ether group-containing bifunctional compound represented by general formula (1), i.e., monoester (half ester), in an amount of production accounting for an extremely high proportion compared to an amount of production of the compound represented by general formula (3), i.e., dicarboxylic acid.

It is generally difficult to use so-called symmetric diester having the same ester groups at the both terminals for selective hydrolysis of only one of the ester groups to prepare half ester. One of the reasons is that it is difficult to chemically distinguish the two ester groups of the symmetric diester.

The method of producing according to the present invention is characterized in that a perfluoro(poly)ether group-containing dialkyl ester is hydrolyzed in the presence of an aqueous solution containing an alkali metal hydroxide for selective hydrolysis of only one of the ester groups so as to acquire the perfluoro(poly)ether group-containing bifunctional compound represented by formula (1), i.e., monoester (half ester), with extremely high selectivity.

In the hydrolysis, an aqueous solution containing an alkali metal hydroxide is used. The alkali metal hydroxide

may be, for example, sodium hydroxide, potassium hydroxide, lithium hydroxide, and cesium hydroxide. Only one of these hydroxides may be used or 2 or more of these hydroxides may be used together. The aqueous solution may contain another base such as calcium hydroxide, barium hydroxide, magnesium hydroxide, strontium hydroxide, and ammonium hydroxide, in addition to the alkali metal hydroxide.

In the hydrolysis, the base containing the alkali metal hydroxide is preferably used in an amount corresponding to the equivalent number of 0.1 to 1.5 per mole of the perfluoro(poly)ether group-containing dialkyl ester (2 equivalent in terms of ester group) represented by general formula (2). The equivalent number of the base is more preferably 0.2 to 1.0, further preferably 0.3 to 0.8. The equivalent number of the base within the ranges described above is advantageous in that the perfluoro(poly)ether group-containing bifunctional compound represented by general formula (1) can be acquired with better selectivity.

The hydrolysis may be performed in the presence of an organic solvent as needed. The organic solvents usable in this case include, acetone, isobutyl alcohol, isopropyl alcohol, isopentyl alcohol, ethylene glycol monoethyl ether, ethyleneglycol mono-n-buthyl ether, ethylene glycol monomethyl ether, cyclohexanol, cyclohexanone, 1,4-dioxane, N,N-dimethylformamide, tetrahydrofuran, 1-butanol, 2-butanol, methanol, methyl ethyl ketone, acetonitrile, dimethylacetamide, N-methylpyrrolidone, sulfolane, dimethyl sulfoxide, ethylene glycol dimethyl ether, diethylene glycol dimethyl ether, triethylene glycol dimethyl ether, tetraethylene glycol dimethyl ether, and cyclopentyl methyl ether. Among these organic solvents, acetonitrile and tetrahydrofuran are preferably used. Only one of these organic solvents may be used or 2 or more of the solvents may be used together. By using the organic solvent, the concentration of the perfluoro(poly)ether group-containing compound represented by general formula (2) can favorably be adjusted in a reaction system. By using the organic solvent, the contact between the perfluoro(poly)ether group-containing compound and the base in the hydrolysis can be adjusted to a more favorable range. As a result, the perfluoro(poly)ether group-containing bifunctional compound represented by general formula (1) can advantageously be acquired with better selectivity.

The hydrolysis may be performed under the condition in which a dispersion auxiliary agent is also present. The dispersion auxiliary agent may be a fluorine atom-containing solvent liquid at -10 to 50 °C and hardly-soluble or insoluble to water. Specific examples of the preferable fluorine atom-containing solvent in the present invention include, perfluorohexane, $CF_3CF_2CHCl_2$, $CF_3CH_2CF_2CH_3$, $CF_3CHFCHFC_2F_5$, 1,1,1,2,2,3,3,4,4,5,5,6,6-tridecafluorooctane, 1,1,2,2,3,3,4-heptafluorocyclopentane, $C_4F_9OCH_3$, $C_4F_9OC_2H_5$, $CF_3CH_2OCF_2CHF_2$, $C_6F_{13}CH=CH_2$, xylene hexafluoride, perfluorobenzene, methylpentadecafluoroheptylketone, trifluoroethanol, pentafluoropropanol, hexafluoroisopropanol, $HCF_2CF_2CH_2OH$, methyltrifluoromethanesulfonate, trifluoroacetic acid, and $CF_3O(CF_2CF_2O)_m(CF_2O)_nCF_2CF_3$ [in formula, m and n independently denotes an integer of 0-1000, and each of repeating units enclosed in parentheses with m or n added thereto is present in arbitrary order in the formula, provided that the sum of m and n is ≥ 1. More preferably used solvents among these fluorine atom-containing solvents are perfluorohexane, $CF_3CF_2CHCl_2$, $CF_3CH_2CF_2CH_3$, $CF_3CHFCHFC_2F_5$, 1,1,1,2,2,3,3,4,4,5,5,6,6-tridecafluorooctane, 1,1,2,2,3,3,4-heptafluorocyclopentane, $C_4F_9OCH_3$, $C_4F_9OC_2H_5$, $CF_3CH_2OCF_2CHF_2$, $C_6F_{13}CH=CH_2$, xylene hexafluoride, perfluorobenzene, methylpentadecafluoroheptylketone, and $CF_3O(CF_2CF_2O)_m(CF_2O)_nCF_2CF_3$ [in formula, m and n independently denotes an integer of 2 or more to 200 or less, and each of repeating units enclosed in parentheses with m or n added thereto is present in arbitrary order in the formula, provided that the sum of n and m is 1 or more]. For the fluorine atom-containing solvent, perfluorohexane and xylene hexafluoride are further preferably used. Only one of the fluorine atom-containing solvents may independently be used or 2 or more of the solvents may be used together.

In the method of producing according to the present invention, the perfluoro(poly)ether group-containing compound (dialkyl ester) represented by general formula (2) is hydrolyzed in an aqueous base solution containing an alkali metal hydroxide. The affinity with water may become extremely low depending on the structure of the perfluoro(poly)ether group-containing compound (dialkyl ester). In this case, the contact between the dialkyl ester and the base may become difficult during the hydrolysis reaction, resulting in a trouble that the reaction efficiency decreases. By using the dispersion auxiliary agent, the contact between the perfluoro(poly)ether group-containing compound (dialkyl ester) and the base is favorably caused and, as a result, the reaction efficiency is advantageously improved so that the selective hydrolysis reaction can more favorably be allowed to proceed.

In the hydrolysis, the mixture of the compound represented by general formula (2) and the aqueous solution containing the alkali metal hydroxide may preferably be adjusted to -10 to 50 °C, for example. This temperature may more preferably be -5 to 40 °C, further preferably -5 to 30 °C. In the hydrolysis reaction, the temperature is adjusted to the temperature range for, for example, 5 to 120 minutes, more preferably 15 to 90 minutes, before mixing.

A method of mixing the compound represented by general formula (2) and the aqueous solution containing the alkali metal hydroxide may be, for example, to gradually add the aqueous solution containing the alkali metal hydroxide with a technique such as continuous dripping to a solution acquired by dissolving the compound represented by general formula (2) into an organic solvent and a reaction auxiliary agent as needed. These substances can be mixed by using a reaction container, a reaction device, and/or a stirring device commonly used by those skilled in the art.

For the hydrolysis, preferably, the substances are reacted by stirring for 0.5 to 12 hours preferably while being adjusted to the temperature described above. This reaction time is preferably 0.5 to 6 hours, more preferably 0.5 to 3 hours.

In the method of producing of the present invention, the hydrolysis more preferably achieves a generation rate $G_{(1)}$ of the perfluoro(poly)ether group-containing bifunctional compound represented by general formula (1) acquired from the compound represented by general formula (2) and a generation rate $G_{(3)}$ of the compound represented by general formula (3) acquired from the compound represented by general formula (2) satisfying the following condition:

$$G_{(1)}/G_{(3)} \geq 9.$$

The condition is further preferably $G_{(1)}/G_{(3)} \geq 15$. The "generation rate $G_{(1)}$" represents the generation rate of the perfluoro(poly)ether group-containing bifunctional compound represented by general formula (1), i.e., monoester, generated by the hydrolysis reaction of the compound represented by general formula (2), i.e., diester. The "generation rate $G_{(3)}$" represents the generation rate of the compound represented by general formula (3), i.e., dicarboxylic acid, generated by the hydrolysis reaction of the compound represented by general formula (2), i.e., diester. The generation rates $G_{(1)}$ and $G_{(3)}$ and $G_{(1)}/G_{(3)}$ can be obtained from the following equation.

[Mathematical 1]

$$\text{generation rate } G_{(1)}\ (\%) = \frac{amount\ of\ generated\ monoester\ (mol)}{amount\ of\ diester\ used\ in\ reaction\ (mol)} \times 100$$

[Mathematical 2]

$$\text{generation rate } G_{(3)}\ (\%) = \frac{amount\ of\ generated\ dicarboxylic\ acid\ (mol)}{amount\ of\ diester\ used\ in\ reaction\ (mol)} \times 100$$

[Mathematical 3]

$$G_{(1)}/G_{(3)}\ (\%) = \frac{amount\ of\ generated\ monoester\ (mol)}{amount\ of\ generated\ dicarboxylic\ acid\ (mol)} \times 100$$

By the hydrolysis as described above, the perfluoro(poly)ether group-containing bifunctional compound represented by formula (1) can selectively be hydrolyzed with a simple procedure. More specifically, in the hydrolysis, the generation amount of the perfluoro(poly)ether group-containing bifunctional compound represented by formula (1), i.e., monoester, is remarkably larger than the generation amount of the compound represented by formula (3), i.e., dicarboxylic acid. Therefore, monoester can be acquired with favorable selectivity. An unreacted remaining raw material compound, i.e., diester, in the hydrolysis can be used in the next hydrolysis reaction. On the other hand, the dicarboxylic acid represented by formula (3) can no longer be used for this purpose even if the dicarboxylic acid is a side reaction product. The hydrolysis method of the present invention is advantageous in that the generation of the side reaction product can extremely favorably be suppressed.

The perfluoro(poly)ether group-containing bifunctional compound of the present invention is a compound extremely important as a raw material compound or an intermediate of the perfluoro(poly)ether group-containing compound contained in a surface treatment agent providing properties such as water repellency, oil repellency, and antifouling properties. By using the perfluoro(poly)ether group-containing bifunctional compound of the present invention, for example, a perfluoro(poly)ether group-containing compound having a hydrolysable silyl group at a terminal thereof can be synthesized.

[Example]

In the examples, "parts" and "%" are based on weight unless otherwise stated. In the examples, repeating units ($CF_2O$), ($CF_2CF_2O$), ($CF(CF_3)CF_2O$), ($CF_2CF_2CF_2O$), ($CF_2CF(CF_3)O$), and ($CF_2CF_2CF_2CF_2O$) making up perfluoropolyether are present in arbitrary order. All the chemical formulas in the following description represent average composition.

Example 1

Into a 100 mL four-neck flask including a stirrer, a dropping funnel, a reflux condenser, and a thermometer, 10 g of (A) represented by chemical formula $CH_3OCOCF_2O-(CF_2CF_2O)_m-CF_2COOCH_3$ (in formula, m=13 to 17, number average molecular weight: 2000) dissolved in 30 g of perfluorohexane, 3.3 mL of acetonitrile, and 33 mL of ion exchanged water are loaded and are stirred at 25 °C for 0.5 hours after sufficient replacement by nitrogen in the system. Subsequently,

15 mL (3.75 mmol) of sodium hydroxide aqueous solution prepared at 0.25 M in advance was dripped through the dropping funnel. After completion of the dripping, a reaction was allowed to occur at 25 °C for 1 hour. After termination of the reaction, a liquid separating operation was performed to completely distill a volatile portion under reduced pressure, thereby producing 9.94 g of composition comprising a perfluoro(poly)ether group-containing bifunctional compound (B) having carboxylic acid at one terminal.

(It is noted that although the raw material (A) has average composition containing 0.12 repeating units of ($CF_2CF_2CF_2CF_2O$) and 0.16 repeating units of ($CF_2CF_2CF_2O$), these units are extremely small in amount and therefore are not described.)

The acquired composition was measured in terms of $^{19}$F-NMR and $^{1}$H-NMR and it was confirmed that the composition is a mixture of the compound (A) (diester), the perfluoro(poly)ether group-containing bifunctional compound (B) having carboxylic acid at one terminal, and the perfluoro(poly)ether group-containing compound (C) having carboxylic acid at the both terminals.

After 9.46 g of the acquired composition was dissolved in 60 mL of perfluorohexane, 30.75 g of silica gel (manufactured by Fuji Silysia Chemical: PSQ 100B) was added and stirred at 25 °C for 1 hour for adsorption by the silica gel. After the solution was subjected to filtration under reduced pressure and the silica gel was washed with 200 mL of perfluorohexane, perfluorohexane was distilled to produce 3.84 g of the compound (A). Also, after washing the silica gel with 200 mL of preliminarily prepared Novec(™)7200 (manufactured by 3M, a hydrofluoroether solvent)/trifluoroethanol mixed solution (volume ratio 60:40), the mixed solution was distilled to produce 5.22 g of the compound (B).

From the amount of the composition used for the separation and the amounts of the compound (A) and the compound (B) acquired from the separation, the perfluoro(poly)ether group-containing compound (C) having carboxylic acid at the both terminals was calculated as 0.4 g. It is noted that $G_{(1)}/G_{(3)}$ was calculated with the perfluoro(poly)ether group-containing bifunctional compound (B) having carboxylic acid at one terminal and the perfluoro(poly)ether group-containing compound (C) having carboxylic acid at the both terminals set to the same molecular weight.

$$G_{(1)}/G_{(3)}=13.1$$

The data of $^{19}$F-NMR and $^{1}$H-NMR of the acquired compound (B) is as follows:
$^{19}$F-NMR (based on BTF; ppm)

| | |
|---|---|
| $-CF_2COOCH_3$ | -77.33 ppm |
| $-CF_2COOH$ | -77.92 ppm |
| $-CF_2CF_2O-$ | -88.40 ppm |

$^{1}$H-NMR(based on TMS; ppm)

| | |
|---|---|
| $-CF_2COOCH_3$ | 4.02 ppm |
| $-CF_2COOH$ | 10.94 ppm |

From the above measurement result, it was confirmed that the structural formula of the acquired compound is $CH_3OCOCF_2O-(CF_2CF_2O)_m-CF_2COOH$ (in formula, m=13 to 17, the number average molecular weight: 2000).

Example 2

Into a 100 mL four-neck flask including a stirrer, a dropping funnel, a reflux condenser, and a thermometer, 10 g of (A) represented by chemical formula $CH_3OCOCF_2O-(CF_2CF_2O)_m-CF_2COOCH_3$ (in formula, m=13 to 17, number average molecular weight: 2000) dissolved in 30 g of perfluorohexane, 3.3 mL of acetonitrile, and 8.7 mL of ion exchanged water are loaded and are stirred at 25 °C for 0.5 hours after sufficient replacement by nitrogen in the system. Subsequently, 3.75 mL (3.75 mmol) of sodium hydroxide aqueous solution prepared at 1.0 M in advance was dripped through the dropping funnel. After completion of the dripping, a reaction was allowed to occur at 25 °C for 1 hour. After termination of the reaction, a liquid separating operation was performed to completely distill a volatile portion under reduced pressure, thereby producing 9.70 g of composition comprising a perfluoro(poly)ether group-containing bifunctional compound (B) having carboxylic acid at one terminal.

(It is noted that although the raw material (A) has average composition containing 0.12 repeating units of ($CF_2CF_2CF_2CF_2O$) and 0.16 repeating units of ($CF_2CF_2CF_2O$), these units are extremely small in amount and therefore are not described.)

The acquired composition was measured in terms of $^{19}F$-NMR and $^{1}H$-NMR and it was confirmed that the composition is a mixture of the compound (A) (diester), the perfluoro(poly)ether group-containing bifunctional compound (B) having carboxylic acid at one terminal, and the perfluoro(poly)ether group-containing compound (C) having carboxylic acid at the both terminals.

After 9.70 g of the acquired composition was dissolved in 30 mL of perfluorohexane, 22.8 g of silica gel (manufactured by Fuji Silysia Chemical: PSQ 100B) was added and stirred at 25 °C for 1 hour for adsorption by the silica gel. After the solution was subjected to filtration under reduced pressure and the silica gel was washed with 200 mL of perfluorohexane, perfluorohexane was distilled to produce 5.42 g of the compound (A). Also, after washing the silica gel with 200 mL of preliminarily prepared Novec(™)7200 (manufactured by 3M, a hydrofluoroether solvent)/trifluoroethanol mixed solution (volume ratio 60:40), the mixed solution was distilled to produce 4.14 g of the compound (B).

From the amount of the composition used for the separation and the amounts of the compound (A) and the compound (B) acquired from the separation, the perfluoro(poly)ether group-containing compound (C) having carboxylic acid at the both terminals was calculated as 0.14 g. It is noted that $G_{(1)}/G_{(3)}$ was calculated with the perfluoro(poly)ether group-containing bifunctional compound (B) having carboxylic acid at one terminal and the perfluoro(poly)ether group-containing compound (C) having carboxylic acid at the both terminals set to the same molecular weight.

$$G_{(1)}/G_{(3)}=29.6$$

## Example 3

Into a 100 mL four-neck flask including a stirrer, a dropping funnel, a reflux condenser, and a thermometer, 10 g of (A) represented by chemical formula $CH_3OCOCF_2O\text{-}(CF_2CF_2O)_m\text{-}CF_2COOCH_3$ (in formula, m=13 to 17, number average molecular weight: 2000), 3.3 mL of acetonitrile, and 33 mL of ion exchanged water are loaded and are stirred at 25 °C for 0.5 hours after sufficient replacement by nitrogen in the system. Subsequently, 12 mL (3 mmol) of sodium hydroxide aqueous solution prepared at 0.25 M in advance was dripped through the dropping funnel. After completion of the dripping, a reaction was allowed to occur at 25 °C for 1 hour. After termination of the reaction, a liquid separating operation was performed to completely distill a volatile portion under reduced pressure, thereby producing 9.90 g of composition comprising a perfluoro(poly)ether group-containing bifunctional compound (B) having carboxylic acid at one terminal.

(It is noted that although the raw material (A) has average composition containing 0.12 repeating units of $(CF_2CF_2CF_2CF_2O)$ and 0.16 repeating units of $(CF_2CF_2CF_2O)$, these units are extremely small in amount and therefore are not described.)

The acquired composition was measured in terms of $^{19}F$-NMR and $^{1}H$-NMR and it was confirmed that the composition is a mixture of the compound (A) (diester), the perfluoro(poly)ether group-containing bifunctional compound (B) having carboxylic acid at one terminal, and the perfluoro(poly)ether group-containing compound (C) having carboxylic acid at the both terminals.

After 9.90 g of the acquired composition was dissolved in 60 mL of perfluorohexane, 33.4 g of silica gel (manufactured by Fuji Silysia Chemical: PSQ 100B) was added and stirred at 25 °C for 1 hour for adsorption by the silica gel. After the solution was subjected to filtration under reduced pressure and the silica gel was washed with 200 mL of perfluorohexane, perfluorohexane was distilled to produce 3.42 g of the compound (A). Also, after washing the silica gel with 200 mL of preliminarily prepared Novec(™)7200 (manufactured by 3M, a hydrofluoroether solvent)/trifluoroethanol mixed solution (volume ratio 60:40), the mixed solution was distilled to produce 6.08 g of the compound (B).

From the amount of the composition used for the separation and the amounts of the compound (A) and the compound (B) acquired from the separation, the perfluoro(poly)ether group-containing compound (C) having carboxylic acid at the both terminals was calculated as 0.4 g. It is noted that $G_{(1)}/G_{(3)}$ was calculated with the perfluoro(poly)ether group-containing bifunctional compound (B) having carboxylic acid at one terminal and the perfluoro(poly)ether group-containing compound (C) having carboxylic acid at the both terminals set to the same molecular weight.

$$G_{(1)}/G_{(3)}=15.2$$

## Example 4

Into a 100 mL four-neck flask including a stirrer, a dropping funnel, a reflux condenser, and a thermometer, 10 g of (A) represented by chemical formula $CH_3OCOCF_2O\text{-}(CF_2CF_2O)_m\text{-}CF_2COOCH_3$ (in formula, m=13 to 17, number average molecular weight: 2000) dissolved in 30 g of perfluorohexane, 3.3 mL of tetrahydrofuran, and 33 mL of ion exchanged water are loaded and are stirred at 25 °C for 0.5 hours after sufficient replacement by nitrogen in the system.

Subsequently, 15 mL (3.75 mmol) of sodium hydroxide aqueous solution prepared at 0.25 M in advance was dripped through the dropping funnel. After completion of the dripping, a reaction was allowed to occur at 25 °C for 1 hour. After termination of the reaction, a liquid separating operation was performed to completely distill a volatile portion under reduced pressure, thereby producing 9.54 g of composition comprising a perfluoro(poly)ether group-containing bifunctional compound (B) having carboxylic acid at one terminal.

(It is noted that although the raw material (A) has average composition comprising 0.12 repeating units of ($CF_2CF_2CF_2CF_2O$) and 0.16 repeating units of ($CF_2CF_2CF_2O$), these units are extremely small in amount and therefore are not described.)

The acquired composition was measured in terms of $^{19}$F-NMR and $^{1}$H-NMR and it was confirmed that the composition is a mixture of the compound (A) (diester), the perfluoro(poly)ether group-containing bifunctional compound (B) having carboxylic acid at one terminal, and the perfluoro(poly)ether group-containing compound (C) having carboxylic acid at the both terminals.

After 9.54 g of the acquired composition was dissolved in 60 mL of perfluorohexane, 33.0 g of silica gel (manufactured by Fuji Silysia Chemical: PSQ 100B) was added and stirred at 25 °C for 1 hour for adsorption by the silica gel. After the solution was subjected to filtration under reduced pressure and the silica gel was washed with 200 mL of perfluorohexane, perfluorohexane was distilled to produce 3.50 g of the compound (A). Also, after washing the silica gel with 200 mL of preliminarily prepared Novec(™)7200 (manufactured by 3M, a hydrofluoroether solvent)/trifluoroethanol mixed solution (volume ratio 60:40), the mixed solution was distilled to produce 5.80 g of the compound (B).

From the amount of the composition used for the separation and the amounts of the compound (A) and the compound (B) acquired from the separation, the perfluoro(poly)ether group-containing compound (C) having carboxylic acid at the both terminals was calculated as 0.24 g. It is noted that $G_{(1)}/G_{(3)}$ was calculated with the perfluoro(poly)ether group-containing bifunctional compound (B) having carboxylic acid at one terminal and the perfluoro(poly)ether group-containing compound (C) having carboxylic acid at the both terminals set to the same molecular weight.

$$G_{(1)}/G_{(3)}=24.2$$

Example 5

Into a 100 mL four-neck flask including a stirrer, a dropping funnel, a reflux condenser, and a thermometer, 10 g of (A) represented by chemical formula $CH_3OCOCF_2O\text{-}(CF_2CF_2O)_m\text{-}CF_2COOCH_3$ (in formula, m=13 to 17, number average molecular weight: 2000) dissolved in 30 g of xylene hexafluoride, 3.3 mL of acetonitrile, 33 mL of ion exchanged water are loaded and are stirred at 25 °C for 0.5 hours after sufficient replacement by nitrogen in the system. Subsequently, 12 mL (3 mmol) of sodium hydroxide aqueous solution prepared at 0.25 M in advance was dripped through the dropping funnel. After completion of the dripping, a reaction was allowed to occur at 25 °C for 1 hour. After termination of the reaction, a liquid separating operation was performed to completely distill a volatile portion under reduced pressure, thereby producing 9.66 g of composition comprising a perfluoro(poly)ether group-containing bifunctional compound (B) having carboxylic acid at one terminal.

(It is noted that although the raw material (A) has average composition containing 0.12 repeating units of ($CF_2CF_2CF_2CF_2O$) and 0.16 repeating units of ($CF_2CF_2CF_2O$), these units are extremely small in amount and therefore are not described.)

The acquired composition was measured in terms of $^{19}$F-NMR and $^{1}$H-NMR and it was confirmed that the composition is a mixture of the compound (A) (diester), the perfluoro(poly)ether group-containing bifunctional compound (B) having carboxylic acid at one terminal, and the perfluoro(poly)ether group-containing compound (C) having carboxylic acid at the both terminals.

After 9.66 g of the acquired composition was dissolved in 60 mL of perfluorohexane, 28.5 g of silica gel (manufactured by Fuji Silysia Chemical: PSQ 100B) was added and stirred at 25 °C for 1 hour for adsorption by the silica gel. After the solution was subjected to filtration under reduced pressure and the silica gel was washed with 200 mL of perfluorohexane, perfluorohexane was distilled to produce 4.25 g of the compound (A). Also, after washing the silica gel with 200 mL of preliminarily prepared Novec(™)7200 (manufactured by 3M, a hydrofluoroether solvent)/trifluoroethanol mixed solution (volume ratio 60:40), the mixed solution was distilled to produce 5.15 g of the compound (B).

From the amount of the composition used for the separation and the amounts of the compound (A) and the compound (B) acquired from the separation, the perfluoro(poly)ether group-containing compound (C) having carboxylic acid at the both terminals was calculated as 0.26 g. It is noted that $G_{(1)}/G_{(3)}$ was calculated with the perfluoro(poly)ether group-containing bifunctional compound (B) having carboxylic acid at one terminal and the perfluoro(poly)ether group-containing compound (C) having carboxylic acid at the both terminals set to the same molecular weight.

$$G_{(1)}/G_{(3)}=19.8$$

INDUSTRIAL APPLICABILITY

The perfluoro(poly)ether group-containing bifunctional compound of the present invention is a compound extremely important as a raw material compound or an intermediate of the perfluoro(poly)ether group-containing compound contained in a surface treatment agent providing properties such as water repellency, oil repellency, and antifouling properties.

## Claims

1. A compound of the formula

A-Rf-Z (1)

wherein

Rf is a group of the formula

$$-(OCF_2)_a-(OC_2F_4)_b-(OC_3F_6)_c-(OC_4F_8)_d-$$

wherein *a*, b, c, and *d* each independently are an integer of 0-200, the sum of *a*, *b,* c, and *d* is at least 1, and each of repeating units enclosed in parentheses with *a*, *b, c,* or *d* added thereto is present in arbitrary order in the formula, wherein ($a+b$) ≥ 10 and ($c+d$) ≤ 10;
A is $R^1$O-CO-W-, where $R^1$ is $C_{1-4}$-alkyl, W and X each independently are a bond, $C_{1-4}$-alkylene, $C_{1-4}$-fluoroalkylene or $C_{1-4}$-perfluoroalkylene, and
Z is -X-Y, where X is a single bond or a bivalent organic group containing 1-4 carbon atoms and Y is a carboxylic acid group or salt thereof.

2. The compound of claim 1, which has an average molecular weight of 500-100,000, and preferably of 1,500-20, 000, as determined by the n.m.r method described in the present specification.

3. The compound of any of claims 1-2, wherein

$-(OC_2F_4)_b-$ is $-(OCF_2CF_2)_b-$,
$-(OC_3F_6)_c-$ is $-(OCF_2CF_2CF_2)_c-$, and
$-(OC_4F_8)_d-$ is $-(OCF_2CF_2CF_2CF_2)_d-$.

4. A compound of the formula

A-Rf-Z (1)

according to claim 1
wherein

Rf is a group of the formula

$$-(OCF_2)_a-(OC_2F_4)_b-(OC_3F_6)_c-(OC_4F_8)_d-$$

wherein *a*, b, c, and *d* each independently are an integer of 0-200, the sum of *a, b, c,* and *d* is at least 1, and each of repeating units enclosed in parentheses with *a*, *b, c,* or *d* added thereto is present in arbitrary order in the formula, wherein ($a+b$) ≥ 10 and ($c+d$) ≤ 10;
A is $R^1$O-CO-W-, where $R^1$ is $C_{1-4}$-alkyl, W and X each independently are a bond, $C_{1-4}$-alkylene, $C_{1-4}$-fluoroalkylene or $C_{1-4}$-perfluoroalkylene,; and the compound of formula (1) has a an average molecular weight of 500-100, 000, as determined by the n.m.r method described in the present specification.
Z is -X-Y, where X is a single bond or a bivalent organic group containing 1-4 carbon atoms and Y is a carboxylic

acid group or salt thereof.

**5.** The composition comprising the compound of claim 4, which further comprises a compound of the formula

A-Rf-A (2)

and a compound of the formula

Z-Rf-Z (3),

wherein A, Rf and Z are as defined in formula (1) in claim4, and
wherein the proportions of amounts are 42-99.9 parts by weight (pbw) of the compound of formulae (1), 0.05-49 pbw of the compound of formula (2) and 0.05-9 pbw of the compound of formula (3), relative to a total of 100 pbw of the compounds of formulae (1)-(3).

**6.** The composition of claim 5, which further comprises 0.01-9 pbw, relative to a total of 100 pbw of the compounds of formulae (1)-(3), of a compound of formula (4):

B-Rf-O-B (4)

wherein Rf is as defined in formula (1) in claim 5, and B each independently is $C_{1-16}$-perfluoroalkyl or $HCF_2(CF_2)_g$- wherein *g* is an integer of 0-15.

**7.** The composition of any of claims 5-6, wherein in the formula

$-(OC_2F_4)_b-$ is $-(OCF_2CF_2)_b-$,
$-(OC_3F_6)_c-$ is $-(OCF_2CF_2CF_2)_c-$, and
$-(OC_4F_8)_d-$ is $-(OCF_2CF_2CF_2CF_2)_d-$.

**8.** A method of producing the compound of any of claims 1-3, comprising hydrolyzing a compound of the formula

A-Rf-A (2)

wherein

Rf is a group of the formula

$$-(OCF_2)_a-(OC_2F_4)_b-(OC_3F_6)_c-(OC_4F_8)_d-$$

wherein *a*, b, c, and *d* each independently are an integer of 0-200, the sum of *a*, *b*, *c*, and *d* is at least 1, and each of repeating units enclosed in parentheses with *a*, *b*, *c*, or *d* added thereto is present in arbitrary order in the formula, wherein $(a+b) \geq 10$ and $(c+d) \leq 10$; and
A each independently is $R^1O$-CO-W-, where $R^1$ is alkyl and W is a bond or a bivalent organic group containing 1-4 carbon atoms; and

wherein the hydrolysis is performed in the presence of a dispersion auxiliary agent including 1 or 2 or more fluorine atom-containing solvents selected from perfluorohexane, $CF_3CF_2CHCl_2$, $CF_3CH_2CF_2CH_3$, $CF_3CHFCHFC_2F_5$, $CF_3-(CF_2)_4-CF_2H$, 1,1,2,2,3,3,4-heptafluorocyclopentane, $C_4F_9OCH_3$, $C_4F_9OC_2H_5$, $CF_3CH_2OCF_2CHF_2$, $C_6F_{13}CH=CH_2$, xylene hexafluoride, perfluorobenzene, methylpentadecafluoroheptylketone, trifluoroethanol, pentafluoropropanol, hexafluoroisopropanol, $HCF_2CF_2CH_2OH$, methyltrifluoromethanesulfonate, trifluoroacetic acid, and $CF_3O(CF_2CF_2O)_m(CF_2O)_nCF_2CF_3$, wherein *m* and *n* independently are an integer of 0-1000, and each of repeating units enclosed in parentheses with *m* or *n* added thereto is present in arbitrary order in the formula, provided that $(m+n) \geq 1$; and
in the presence of an aqueous solution containing an alkali metal hydroxide.

**9.** A method of producing the composition of any of claims 5-7, comprising hydrolyzing a compound of the formula

A-Rf-A (2)

wherein

Rf is a group of the formula

$$-(OCF_2)_a-(OC_2F_4)_b-(OC_3F_6)_c-(OC_4F_8)_d-$$

wherein *a*, b, c, and d each independently are an integer of 0-200, the sum of *a, b, c,* and *d* is at least 1, and each of repeating units enclosed in parentheses with a, *b, c,* or *d* added thereto is present in arbitrary order in the formula, wherein ($a+b$) ≥ 10 and ($c+d$) ≤ 10; and
A each independently is $R^1O$-CO-W-, where $R^1$ is alkyl and W is a bond or a bivalent organic group containing 1-4 carbon atoms; and

wherein the hydrolysis is performed in the presence of a dispersion auxiliary agent including 1 or 2 or more fluorine atom-containing solvents selected from perfluorohexane, $CF_3CF_2CHCl_2$, $CF_3CH_2CF_2CH_3$, $CF_3CHFCHFC_2F_5$, $CF_3-(CF_2)_4-CF_2H$, 1,1,2,2,3,3,4-heptafluorocyclopentane, $C_4F_9OCH_3$, $C_4F_9OC_2H_5$, $CF_3CH_2OCF_2CHF_2$, $C_6F_{13}CH=CH_2$, xylene hexafluoride, perfluorobenzene, methylpentadecafluoroheptylketone, trifluoroethanol, pentafluoropropanol, hexafluoroisopropanol, $HCF_2CF_2CH_2OH$, methyltrifluoromethanesulfonate, trifluoroacetic acid, and $CF_3O(CF_2CF_2O)_m(CF_2O)_nCF_2CF_3$, wherein *m* and *n* independently are an integer of 0-1000, and each of repeating units enclosed in parentheses with *m* or *n* added thereto is present in arbitrary order in the formula, provided that ($m+n$) ≥ 1; and
in the presence of an aqueous solution containing an alkali metal hydroxide.

**10.** The method of claim 9, wherein the hydrolysis achieves a generation rate $G_{(1)}$ of the compound of formula (1) acquired from the compound of formula (2) and a generation rate $G_{(3)}$ of the compound of formula (3) acquired from the compound of formula (2), which satisfy the condition of $G_{(1)}/G_{(3)} \geq 9$.

**11.** The method of any of claims 8-10, wherein the hydrolysis includes 1 or 2 or more organic solvents selected from acetone, isobutyl alcohol, isopropyl alcohol, isopentyl alcohol, ethylene glycol monoethyl ether, ethyleneglycol mono-n-buthyl ether, ethylene glycol monomethyl ether, cyclohexanol, cyclohexanone, 1,4-dioxane, N,N-dimethylformamide, tetrahydrofuran, 1-butanol, 2-butanol, methanol, methyl ethyl ketone, acetonitrile, dimethylacetamide, N-methylpyrrolidone, sulfolane, dimethyl sulfoxide, ethylene glycol dimethyl ether, diethylene glycol dimethyl ether, triethylene glycol dimethyl ether, tetraethylene glycol dimethyl ether, and cyclopentyl methyl ether.

## Patentansprüche

**1.** Verbindung der Formel

A-Rf-Z (1)

worin

Rf für eine Gruppe der folgenden Formel steht

$$-(OCF_2)_a-(OC_2F_4)_b-(OC_3F_6)_c-(OC_4F_8)_d-$$

worin *a*, *b, c* und *d* jeweils unabhängig voneinander für eine ganze Zahl von 0-200 stehen, die Summe von *a, b, c* und *d* mindestens 1 ist und jede der Wiederholungseinheiten innerhalb der Klammern, an die a, *b, c* oder *d* hinzugefügt sind, in beliebiger Reihenfolge in der Formel vorliegt, wobei ($a+b$) ≥ 10 und ($c+d$) ≤ 10;
A für $R^1O$-CO-W- steht, worin $R^1$ für $C_{1-4}$-Alkyl steht, W und X jeweils unabhängig voneinander für eine Bindung, $C_{1-4}$-Alkylen, $C_{1-4}$-Fluoralkylen oder $C_{1-4}$-Perfluoralkylen stehen, und
Z für -X-Y steht, worin X für eine Einfachbindung oder eine zweiwertige organische Gruppe mit 1 bis 4 Kohlenstoffatomen steht und Y für eine Carbonsäuregruppe oder ein Salz davon steht.

**2.** Verbindung gemäß Anspruch 1, die ein gemäß dem NMR-Verfahren der vorliegenden Beschreibung bestimmtes mittleres Molekulargewicht von 500-100.000 und vorzugsweise von 1.500-20.000 aufweist.

**3.** Verbindung gemäß einem der Ansprüche 1-2, worin

$-(OC_2F_4)_b-$ für $-(OCF_2CF_2)_b-$ steht,
$-(OC_3F_6)_c-$ für $-(OCF_2CF_2CF_2)_c-$ steht, und
$-(OC_4F_8)_d-$ für - $(OCF_2CF_2CF_2CF_2)_d-$ steht.

**4.** Verbindung der Formel

A-Rf-Z (1)

gemäß Anspruch 1 worin

Rf für eine Gruppe der folgenden Formel steht

$$-(OCF_2)_a-(OC_2F_4)_b-(OC_3F_6)_c-(OC_4F_8)_d-$$

worin *a, b, c* und *d* jeweils unabhängig voneinander für ganze Zahl von 0-200 stehen, die Summe von *a, b, c* und *d* mindestens 1 ist und jede der Wiederholungseinheiten innerhalb der Klammern, an die *a, b, c* oder *d* hinzugefügt sind, in beliebiger Reihenfolge in der Formel vorliegt, wobei $(a+b) \geq 10$ und $(c+d) \leq 10$;
A für $R^1O$-CO-W- steht, worin $R^1$ für $C_{1-4}$-Alkyl steht, W und X jeweils unabhängig voneinander für eine Bindung, $C_{1-4}$-Alkylen, $C_{1-4}$-Fluoralkylen oder $C_{1-4}$-Perfluoralkylen stehen;
und die Verbindung der Formel (1) ein gemäß dem NMR-Verfahren der vorliegenden Beschreibung bestimmtes mittleres Molekulargewicht von 500-100.000 aufweist
Z für -X-Y steht, worin X für eine Einfachbindung oder eine zweiwertige organische Gruppe mit 1 bis 4 Kohlenstoffatomen steht und Y für eine Carbonsäuregruppe oder ein Salz davon steht.

**5.** Zusammensetzung, umfassend die Verbindung gemäß Anspruch 4, die ferner eine Verbindung der folgenden Formel

A-Rf-A (2)

und eine Verbindung der folgenden Formel

Z-Rf-Z (3)

umfasst worin A, Rf und Z wie in Formel (1) in Anspruch 4 definiert sind, und wobei der Mengenanteil der Verbindung der Formel (1) 42-99,9 Gewichtsteile (pbw), der Verbindung der Formel (2) 0,05-49 pbw und der Verbindung der Formel (3) 0,05-9 pbw beträgt, bezogen auf insgesamt 100 pbw der Verbindungen der Formeln (1)-(3).

**6.** Zusammensetzung gemäß Anspruch 5, die ferner 0,01-9 pbw einer Verbindung der Formel (4) umfasst, bezogen auf insgesamt 100 Gewichtsteile der Verbindungen der Formeln (1) bis (3):

B-Rf-O-B (4)

worin Rf wie in Formel (1) in Anspruch 5 definiert ist, und B jeweils unabhängig voneinander für $C_{1-16}$-Perfluoralkyl oder $HCF_2(CF_2)_g$- steht, worin *g* für eine ganze Zahl von 0-15 steht.

**7.** Zusammensetzung gemäß einem der Ansprüche 5-6, worin in der Formel

$-(OC_2F_4)_b-$ für $-(OCF_2CF_2)_b-$ steht,
$-(OC_3F_6)_c-$ für $-(OCF_2CF_2CF_2)_c-$ steht, und
$-(OC_4F_8)_d-$ für $-(OCF_2CF_2CF_2CF_2)_d-$ steht.

**8.** Verfahren zur Herstellung der Verbindung gemäß einem der Ansprüche 1-3, umfassend das Hydrolysieren einer Verbindung der Formel

A-Rf-A (2)

worin

Rf für eine Gruppe der folgenden Formel steht

$$-(OCF_2)_a-(OC_2F_4)_b-(OC_3F_6)_c-(OC_4F_8)_d-$$

worin *a, b, c* und *d* jeweils unabhängig voneinander für ganze Zahl von 0-200 stehen, die Summe von *a, b, c* und *d* mindestens 1 ist und jede der Wiederholungseinheiten innerhalb der Klammern, an die *a, b, c* oder *d* hinzugefügt sind, in beliebiger Reihenfolge in der Formel vorliegt, wobei $(a+b) \geq 10$ und $(c+d) \leq 10$; und
A jeweils unabhängig voneinander für $R^1O$-CO-W- steht, worin $R^1$ für Alkyl steht und W für eine Bindung oder eine zweiwertige organische Gruppe mit 1 bis 4 Kohlenstoffatomen steht; und

wobei die Hydrolyse durchgeführt wird in der Gegenwart eines Dispersionshilfsmittels, umfassend 1 oder 2 oder mehr fluorhaltige Lösungsmittel, ausgewählt aus Perfluorhexan, $CF_3CF_2CHCl_2$, $CF_3CH_2CF_2CH_3$, $CF_3CHFCHFC_2F_5$, $CF_3-(CF_2)_4-CF_2H$, 1, 1, 2, 2, 3, 3, 4-Heptafluorcyclopentan, $C_4F_9OCH_3$, $C_4F_9OC_2H_5$, $CF_3CH_2OCF_2CHF_2$, $C_6F_{13}CH=CH_2$, Xylolhexafluorid, Perfluorbenzol, Methylpentadecafluorheptylketone, Trifluorethanol, Pentafluorpropanol, Hexafluorisopropanol, $HCF_2CF_2CH_2OH$, Methyltrifluormethansulfonat, Trifluoressigsäure, und $CF_3O(CF_2CF_2O)_m(CF_2O)_nCF_2CF_3$, worin *m* und *n* unabhängig voneinander für eine ganze Zahl von 0-1000 stehen und jede der Wiederholungseinheiten innerhalb der Klammern, an die *m* oder n hinzugefügt sind, in beliebiger Reihenfolge in der Formel vorliegt, unter der Voraussetzung, dass $(m+n)\geq 1$ ist; und
in der Gegenwart einer wässrigen Lösung, die ein Alkalimetallhydroxid enthält.

**9.** Verfahren zur Herstellung der Zusammensetzung gemäß einem der Ansprüche 5-7, umfassend das Hydrolysieren einer Verbindung der Formel

A-Rf-A (2)

worin

Rf für eine Gruppe der Formel folgenden steht

$$-(OCF_2)_a-(OC_2F_4)_b-(OC_3F_6)_c-(OC_4F_8)_d-$$

worin *a, b, c* und d jeweils unabhängig voneinander für ganze Zahl von 0-200 stehen, die Summe von *a, b, c* und *d* mindestens 1 ist und jede der Wiederholungseinheiten innerhalb der Klammern, an die *a, b, c* oder *d* hinzugefügt sind, in beliebiger Reihenfolge in der Formel vorliegt, wobei $(a+b) \geq 10$ und $(c+d) \leq 10$; und
A jeweils unabhängig voneinander für $R^1O$-CO-W- steht, worin $R^1$ für Alkyl steht und W für eine Bindung oder eine zweiwertige organische Gruppe mit 1 bis 4 Kohlenstoffatomen steht; und

wobei die Hydrolyse durchgeführt wird in der Gegenwart eines Dispersionshilfsmittels, umfassend 1 oder 2 oder mehr fluorhaltige Lösungsmittel, ausgewählt aus Perfluorhexan, $CF_3CF_2CHCl_2$, $CF_3CH_2CF_2CH_3$, $CF_3CHFCHFC_2F_5$, $CF_3-(CF_2)_4-CF_2H$, 1, 1, 2, 2, 3, 3, 4-Heptafluorcyclopentan, $C_4F_9OCH_3$, $C_4F_9OC_2H_5$, $CF_3CH_2OCF_2CHF_2$, $C_6F_{13}CH=CH_2$, Xylolhexafluorid, Perfluorbenzol, Methylpentadecafluorheptylketone, Trifluorethanol, Pentafluorpropanol, Hexafluorisopropanol, $HCF_2CF_2CH_2OH$, Methyltrifluormethansulfonat, Trifluoressigsäure, und $CF_3O(CF_2CF_2O)_m(CF_2O)_nCF_2CF_3$, worin *m* und *n* unabhängig voneinander für eine ganze Zahl von 0-1000 stehen und jede der Wiederholungseinheiten innerhalb der Klammern, an die m oder n hinzugefügt sind, in beliebiger Reihenfolge in der Formel vorliegt, unter der Voraussetzung, dass $(m+n)\geq 1$ ist; und
in Gegenwart einer wässrigen Lösung, die ein Alkalimetallhydroxid enthält.

**10.** Verfahren gemäß Anspruch 9, wobei die Hydrolyse eine Erzeugungsrate $G_{(1)}$ der Verbindung der Formel (1), die aus der Verbindung der Formel (2) erhalten wird, erreicht und eine Erzeugungsrate $G_{(3)}$ der Verbindung der Formel (3), die aus der Verbindung der Formel (2) erhalten wird, erreicht, welche die Bedingung $G_{(1)}/G_{(3)} \geq 9$ erfüllen.

**11.** Verfahren gemäß einem der Ansprüche 8-10, wobei die Hydrolyse 1 oder 2 oder mehr organische Lösungsmittel einschließt, ausgewählt aus Aceton, Isobutylalkohol, Isopropylalkohol, Isopentylalkohol, Ethylenglykolmonoethylether, Ethylenglykolmono-n-butylether, Ethylenglykolmonomethylether, Cyclohexanol, Cyclohexanon, 1,4-Dioxan, N,N-Dimethylformamid, Tetrahydrofuran, 1-Butanol, 2-Butanol, Methanol, Methylethylketon, Acetonitril, Dimethylacetamid, N-Methylpyrrolidon, Sulfolan, Dimethylsulfoxid, Ethylenglykoldimethylether, Diethylenglykoldimethylether, Triethylenglykoldimethylether, Tetraethylenglykoldimethylether und Cyclopentylmethylether.

## Revendications

**1.** Composé de formule

A-Rf-Z (1)

dans laquelle

Rf est un groupe de formule

$$-(OCF_2)_a-(OC_2F_4)_b-(OC_3F_6)_c-(OC_4F_8)_d-$$

dans laquelle *a*, *b*, *c*, et *d* sont chacun indépendamment un nombre entier allant de 0 à 200, la somme de *a*, *b*, *c*, et *d* est au moins 1, et chacun des motifs répétitifs entre parenthèses avec *a*, *b*, *c*, ou *d* ajouté à ceux-ci est présent dans un ordre arbitraire dans la formule, où $(a + b) \geq 10$ et $(c + d) \leq 10$ ;
A est $R^1O$-CO-W-, où $R^1$ est un alkyle en $C_1$ à $C_4$, W et X sont chacun indépendamment une liaison, un alkylène en $C_1$ à $C_4$, un fluoroalkylène en $C_1$ à $C_4$ ou un perfluoroalkylène en $C_1$ à $C_4$, et
Z est -X-Y, où X est une liaison simple ou un groupe organique bivalent contenant 1 à 4 atomes de carbone et Y est un groupe acide carboxylique ou un sel de celui-ci.

**2.** Composé selon la revendication 1, qui présente un poids moléculaire moyen de 500 à 100 000, et de préférence de 1500 à 20 000, tel que déterminé par le procédé RMN décrit dans le présent mémoire.

**3.** Composé selon l'une quelconque des revendications 1 et 2, dans lequel

$-(OC_2F_4)_b-$ est $-(OCF_2CF_2)_b-$,
$-(OC_3F_6)_c-$ est $-(OCF_2CF_2CF_2)_c-$, et
$-(OC_4F_8)_d-$ est $-(OCF_2CF_2CF_2CF_2)_d-$.

**4.** Composé de formule A-Rf-Z (1) selon la revendication 1 dans laquelle
Rf est un groupe de formule

$$-(OCF_2)_a-(OC_2F_4)_b-(OC_3F_6)_c-(OC_4F_8)_d-$$

dans laquelle *a*, *b*, *c*, et *d* sont chacun indépendamment un nombre entier allant de 0 à 200, la somme de *a*, *b*, *c*, et d est au moins 1, et chacun des motifs répétitifs entre parenthèses avec *a*, *b*, *c*, ou *d* ajouté à ceux-ci est présent dans un ordre arbitraire dans la formule, où $(a + b) \geq 10$ et $(c + d) \leq 10$ ;
A est $R^1O$-CO-W-, où $R^1$ est un alkyle en $C_1$ à $C_4$, W et X sont chacun indépendamment une liaison, un alkylène en $C_1$ à $C_4$, un fluoroalkylène en $C_1$ à $C_4$ ou un perfluoroalkylène en $C_1$ à $C_4$, ;
et le composé de formule (1) présente un poids moléculaire moyen de 500 à 100 000, tel que déterminé par le procédé RMN décrit dans le présent mémoire.
Z est -X-Y, où X est une liaison simple ou un groupe organique bivalent contenant 1 à 4 atomes de carbone et Y est un groupe acide carboxylique ou un sel de celui-ci.

**5.** Composition comprenant le composé selon la revendication 4, qui comprend en outre un composé de formule

A-Rf-A (2)

et un composé de formule

Z-Rf-Z (3),

dans lesquelles A, Rf et Z sont tels que définis dans la formule (1) dans la revendication 4, et
dans laquelle les proportions de quantités sont de 42 à 99,9 parties en poids du composé de formule (1), de 0,05 à 49 parties en poids du composé de formule (2) et de 0,05 à 9 parties en poids du composé de formule (3), par rapport à un total de 100 parties en poids des composés de formules (1) à (3).

**6.** Composition selon la revendication 5, qui comprend en outre 0,01 à 9 parties en poids, par rapport à un total de

100 parties en poids des composés de formules (1) à (3), d'un composé de formule (4) :

B-Rf-O-B (4)

dans laquelle Rf est tel que défini dans la formule (1) dans la revendication 5, et les B sont chacun indépendamment un perfluoroalkyle en $C_1$ à $C_{16}$ ou $HCF_2(CF_2)_g$-, où *g* est un nombre entier allant de 0 à 15.

**7.** Composition selon l'une quelconque des revendications 5 et 6, dans laquelle dans la formule

$-(OC_2F_4)_b-$ est $-(OCF_2CF_2)_b-$,
$-(OC_3F_6)_c-$ est $-(OCF_2CF_2CF_2)_c-$, et
$-(OC_4F_8)_d-$ est $-(OCF_2CF_2CF_2CF_2)_d-$.

**8.** Procédé de production du composé selon l'une quelconque des revendications 1 à 3, comprenant l'hydrolyse d'un composé de formule

A-Rf-A (2)

dans laquelle

Rf est un groupe de formule

$$-(OCF_2)_a-(OC_2F_4)_b-(OC_3F_6)_c-(OC_4F_8)_d-$$

dans laquelle *a*, *b*, *c*, et *d* sont chacun indépendamment un nombre entier allant de 0 à 200, la somme de *a*, *b*, *c*, et *d* est au moins 1, et chacun des motifs répétitifs entre parenthèses avec *a*, *b*, *c*, ou d ajouté à ceux-ci est présent dans un ordre arbitraire dans la formule, où $(a + b) \geq 10$ et $(c + d) \leq 10$ ; et
les A sont chacun indépendamment $R^1O$-CO-W-, où $R^1$ est un alkyle et W est une liaison ou un groupe organique bivalent contenant 1 à 4 atomes de carbone ; et
dans lequel l'hydrolyse est effectuée en présence d'un agent auxiliaire de dispersion incluant 1 ou 2 ou plus de 2 solvants fluorés sélectionnés parmi le perfluorohexane, $CF_3CF_2CHCl_2$, $CF_3CH_2CF_2CH_3$, $CF_3CHFCHFC_2F_5$, $CF_3-(CF_2)_4-CF_2H$, le 1,1,2,2,3,3,4-heptafluorocyclopentane, $C_4F_9OCH_3$, $C_4F_9OC_2H_5$, $CF_3CH_2OCF_2CHF_2$, $C_6F_{13}CH=CH_2$, l'hexafluorure de xylène, le perfluorobenzène, la méthylpentadécafluoroheptylcétone, le trifluoroéthanol, le pentafluoropropanol, l'hexafluoroisopropanol, $HCF_2CF_2CH_2OH$, le trifluorométhanesulfonate de méthyle, l'acide trifluoroacétique, et $CF_3O(CF_2CF_2O)_m(CF_2O)_nCF_2CF_3$, dans lequel *m* et *n* sont indépendamment un nombre entier allant de 0 à 1000, et chacun des motifs répétitifs entre parenthèses avec *m* ou *n* ajouté ceux-ci est présent dans un ordre arbitraire dans la formule, à condition que $(m+n) \geq 1$ ; et en présence d'une solution aqueuse contenant un hydroxyde de métal alcalin.

**9.** Procédé de production de la composition selon l'une quelconque des revendications 5 à 7, comprenant l'hydrolyse d'un composé de formule

A-Rf-A (2)

dans laquelle

Rf est un groupe de formule

$$-(OCF_2)_a-(OC_2F_4)_b-(OC_3F_6)_c-(OC_4F_8)_d-$$

dans laquelle *a*, *b*, *c*, et *d* sont chacun indépendamment un nombre entier allant de 0 à 200, la somme de *a*, *b*, *c*, et *d* est au moins 1, et chacun des motifs répétitifs entre parenthèses avec *a*, *b*, *c*, ou *d* ajouté à ceux-ci est présent dans un ordre arbitraire dans la formule, dans lequel $(a + b) \geq 10$ et $(c + d) \leq 10$ ; et
les A sont chacun indépendamment $R^1O$-CO-W-, où $R^1$ est un alkyle et W est une liaison ou un groupe organique bivalent contenant 1 à 4 atomes de carbone ; et
dans lequel l'hydrolyse est effectuée en présence d'un agent auxiliaire de dispersion incluant 1 ou 2 ou plus de 2 solvants fluorés sélectionnés parmi le perfluorohexane, $CF_3CF_2CHCl_2$, $CF_3CH_2CF_2CH_3$, $CF_3CHFCHFC_2F_5$, $CF_3-(CF_2)_4-CF_2H$, le 1,1,2,2,3,3,4-heptafluorocyclopentane, $C_4F_9OCH_3$, $C_4F_9OC_2H_5$,

$CF_3CH_2OCF_2CHF_2$, $C_6F_{13}CH=CH_2$, l'hexafluorure de xylène, le perfluorobenzène, la méthylpentadécafluoroheptylcétone, le trifluoroéthanol, le pentafluoropropanol, l'hexafluoroisopropanol, $HCF_2CF_2CH_2OH$, le trifluorométhanesulfonate de méthyle, l'acide trifluoroacétique, et $CF_3O(CF_2CF_2O)_m(CF_2O)_nCF_2CF_3$, dans lequel *m* et *n* sont indépendamment un nombre entier allant de 0 à 1000, et chacun des motifs répétitifs entre parenthèses avec *m* ou *n* ajouté ceux-ci est présent dans un ordre arbitraire dans la formule, à condition que $(m+n) \geq 1$ ; et en présence d'une solution aqueuse contenant un hydroxyde de métal alcalin.

**10.** Procédé selon la revendication 9, dans lequel l'hydrolyse atteint un taux de génération $G_{(1)}$ du composé de formule (1) acquis à partir du composé de formule (2) et un taux de génération $G_{(3)}$ du composé de formule (3) acquis à partir du composé de formule (2), qui satisfont la condition $G_{(1)}/G_{(3)} \geq 9$.

**11.** Procédé selon l'une quelconque des revendications 8 à 10, dans lequel l'hydrolyse inclut 1 ou 2 ou plus de 2 solvants organiques sélectionnés parmi l'acétone, l'alcool isobutylique, l'alcool isopropylique, l'alcool isopentylique, le monoéthyléther d'éthylène glycol, le mono-n-butyléther d'éthylène glycol, le monométhyléther d'éthylène glycol, le cyclohexanol, la cyclohexanone, le 1,4-dioxane, le N,N-diméthylformamide, le tétrahydrofurane, le 1-butanol, le 2-butanol, le méthanol, la méthyléthylcétone, l'acétonitrile, le diméthylacétamide, la N-méthylpyrrolidone, le sulfolane, le diméthylsulfoxyde, le diméthyléther d'éthylène glycol, le diméthyléther de diéthylène glycol, le diméthyléther de triéthylène glycol, le diméthyléther de tétraéthylène glycol, et le méthyléther de cyclopentyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11989052733 B
- JP 2004359955 A
- JP 2010533644 A
- JP HI1989052733 B
- US 2004176636 A
- EP 0165649 A2